# EUROPÄISCHE PATENTSCHRIFT

(11) **EP 1 104 729 B1**
(45) Veröffentlichungstag und Bekanntmachung des Hinweises auf die Patenterteilung: **08.06.2005**
(21) Anmeldenummer: 00125239.4
(22) Anmeldetag: 23.11.2000
(51) Int. Cl.: B60R 22/343

(54) **Gurtaufrollersystem**
Belt retractor system
Rétracteur de sangle

(30) Priorität: 01.12.1999 DE 19957814
(43) Veröffentlichungstag der Anmeldung: 06.06.2001
(73) Patentinhaber: TRW Automotive Electronics & Components GmbH & Co. KG, 78315 Radolfzell (DE)
(72) Erfinder: Peter, Cornelius, 77815 Bühl (DE); Dürrstein, Rolf, Dr., 74321 Bietigheim (DE)
(74) Vertreter: Degwert, Hartmut, Dipl.-Phys.

(56) Entgegenhaltungen:
- EP-A- 0 893 313
- DE-A- 4 029 441
- DE-A- 19 636 448
- DE-U- 29 717 477

## Beschreibung

Die Erfindung betrifft einen Gurtaufroller für ein Insassen-Rückhaltesystem.

Moderne Gurtaufroller sind zusätzlich zu den üblichen gurtbandund/oder fahrzeugsensitiven Sperrfunktionen mit bedarfsweise vorgesehenen Zusatzfunktionen ausgestattet. Eine dieser Zusatzfunktionen ist die Sicherung von Lasten oder Kindersitzen durch einen Blockierzustand, der durch vollständigen Gurtbandabzug und anschließendes Wiederaufrollen des Gurtbandes eingeschaltet wird. Die Rückschaltung in den notfallsperrenden Zustand wird durch vollständiges Aufwickeln des Gurtbandes erreicht. Eine andere Zusatzfunktion ist die Gurttrageerkennung, wozu die abgezogene Gurtbandlänge ermittelt wird.

Derartige Zusatzfunktionen eines Gurtaufrollers erfordern einen hohen Aufwand an mechanischen Bauteilen. Besonders aufwendig ist die Bereitstellung unterschiedlicher Gurtaufrollertypen für die jeweils angeforderten Zusatzfunktionen.

DE 196 36 448 A1 offenbart eine Sicherheitsgurt-Aufrolleinrichtung im Sune des Oberbegriffs des Anspruch 1 für ein Fahrzeuginsassen-Rückhaltesystem. Abhängig von der Auswertung von Sensorsignalen steuert eine CPU einen elektrischen Motor. Die Rotation des elektrischen Motors wird über eine Getriebekupplung mit mehreren Zahnrädern auf die Wickelwelle des Sicherheitsgurtes übertragen.

EP 0 893 313 A2 offenbart eine Vorrichtung zum Aufrollen eines Sicherheitsgurtbandes, bei der in Abhängigkeit von bestimmten Fahrsituationen einstellbare Drehmomente auf eine Wickelwelle zur Einwirkung gebracht werden. Dazu ist ein Getriebe zwischen einem Elektromotor und der Wickelwelle angeordnet. Das Getriebe wird in verschiedene Getriebeschaltstellungen gebracht, über die wahlweise eine Änderung der Federkraft einer Triebfeder bewirkt wird. Die Auswahl der verschiedenen Getriebeschaltpositionen erfolgt von einer zentralen Auswerte- und Steuereinrichtung, die entsprechende Sensorsignale auswertet.

Durch die Erfindung wird ein neuartiger Gurtaufroller geschaffen, der bei einem einheitlichen mechanischen Grundaufbau die bedarfsweise Verwirklichung einer Reihe von Zusatzfunktionen ermöglicht.

Der erfindungsgemäße Gurtaufroller enthält einen Rahmen, eine in dem Rahmen drehbar gelagerte Gurtspule, einen Sperrmechanismus zur selektiven Blockierung der Gurtspule und einen fahrzeugsensitiven Sensor. Zur Betätigung des Sperrmechanismus ist ein Aktor vorgesehen. Anstelle der herkömmlichen Aufrollfeder ist ein Elektromotor vorgesehen, der die Gurtspule mit dem jeweils geforderten Aufrollmoment beaufschlagt. Die Funktionen des Gurtaufrollers werden durch eine elektronische Steuereinheit gesteuert, die eine Eingangsschnittstelle und eine Ausgangsschnittstelle aufweist. Der fahrzeugsensitive Sensor ist an die Eingangsschnittstelle angeschlossen, und der Aktor ist an die Ausgangsschnittstelle angeschlossen, ebenso wie der Elektromotor. Mit diesem Grundkonzept sind die Sperr- und Aufrollfunktionen des Gurtaufrollers leicht an die jeweils gestellten Forderungen anzupassen, weil lediglich Programmdaten anzupassen sind, nach denen die elektronische Steuereinheit arbeitet. Ferner können an die Eingangsschnittstelle der elektronischen Steuereinheit verschiedene Sensoren angeschlossen werden, deren Ausgangssignale bei der Ansteuerung des Sperrmechanismus berücksichtigt werden. Ebenso können an die Ausgangsschnittstelle der elektronischen Steuereinheit weitere Aktoren oder Stellglieder und dergleichen angeschlossen werden, deren Funktionen in Abhängigkeit von den Sensorsignalen gesteuert werden, die über die Eingangsschnittstelle der elektronischen Steuereinheit abgefragt werden.

Der erfindungsgemäße Gurtaufroller ist dadurch gekennzeichnet, daß der Aktor durch einen Elektromagnet gebildet ist, der eine Sperrklinke des Sperrmechanismus ansteuert. Ferner dadurch, daß der Elektromotor durch einen Zahnriemen mit der Gurtspule gekoppelt ist, wobei der Zahnriemen ein Antriebsritzel des Elektromotors mit einer seitlich an der Gurtspule angeschlossenen Zahnriemenscheibe größeren Durchmessers als das Antriebsritzel koppelt. Der Elektromotor ist auf einer seitlich an einem Schenkel des Rahmens begrenzt verschwenkbar angebrachten Lagerplatte gelagert und der Zahnriemen ist an einem Abschnitt zwischen Zahnriemenscheibe und Antriebsritzel durch Verschwenken der Lagerplatte gegen eine an dem Schenkel des Rahmens gelagerte Spannrolle andrückbar.

Bei der bevorzugten Ausführungsform verfügt der Gurtaufroller über einen Elektromotor, insbesondere Servomotor, der nicht nur die Funktion der Aufrollfeder des herkömmlichen mechanischen Gurtaufrollers übernimmt, sondern auch eine Vorstraffung des Gurtbandes bei einem drohenden Fahrzeugaufprall gewährleisten kann.

Einer der an die Eingangsschnittstelle angeschlossenen Sensoren liefert bei der bevorzugten Ausführungsform ein die Gurtspulendrehung repräsentierendes Inkrementalsignal, vorzugsweise in Kombination mit einem weiteren, die Drehrichtung anzeigenden Signal. Diese Signale werden von der elektronischen Steuereinheit durch aufwärts/abwärts-Zählung ausgewertet, um den absoluten Drehwinkel der Gurtspule und somit die abgezogene Gurtbandlänge zu bestimmen.

Bei dieser bevorzugten Ausführungsform hat der Gurtaufroller die folgende Funktionalität, wobei einzelne Funktionen auch nur bei Bedarf verwirklicht sein können:
- Kinder/Lastensicherung
- Gurttrageerkennung
- Fahrzeugsensitive Sperrung
- Aufrollfeder
- Komfortgetriebe
- Sperrung bei nichtverriegelter Sitzlehne
- Gurtbandsensitive Sperrung
- Gurtband-Vorstraffung.

Bei dem erfindungsgemäßen Gurtaufrollersystem sind, auf einem einheitlichen elektromechanischen Grundkonzept aufbauend, zahlreiche Ausführungsvarianten vorgesehen, die sich in der Funktionalität voneinander unterscheiden. Die Funktionalität wird im wesentlichen durch die an die Eingangsschnittstelle der elektronischen Steuereinheit angeschlossenen Sensoren und durch das fest eingespeicherte Programm bestimmt, nach dem die Steuereinheit arbeitet.

Bei der bevorzugten Ausführungsform sind Zusatzfunktionen verwirklicht, die mit herkömmlichen Gurtaufrollern nicht realisierbar sind. Eine dieser Zusatzfunktionen ist die vorsorgliche Gurtbandstraffung in einer kritischen Situation, z. B. einer Vollbremsung. Bei Verwendung eines sehr leistungsfähigen Elektromotor-Antriebs ist eine Straffkraft von 250 N oder mehr möglich. Realistisch ist ein Straffweg von 120 mm oder mehr bei einer Straffzeit von nur etwa 120 ms. Mit einer solchen Vorstraffung kann die Gurtlose bereits vor einem Unfall entfernt werden, um das Verletzungsrisiko für Insassen zu minimieren und den Wirkungsgrad des herkömmlichen, insbesondere pyrotechnischen, Gurtstraffers zu optimieren.

Die Gurtbandvorstraffung kann auch zu dem Zweck eingesetzt werden, die Sitzposition eines Insassen zu korrigieren, um die Gefahr von Verletzungen durch aufblasbare Rückhalteeinrichtungen (Airbag) zu minimieren.

Wenn es im Anschluß an eine Gurtbandvorstraffung wieder zu einem normalen Fahrzustand kommt, kann die Gurtstraffung rückgängig gemacht werden.

Andererseits ist nach erfolgter Gurtbandvorstraffung und anschließender Freigabe eine erneute Gurtbandvorstraffung möglich.

Bei der bevorzugten Ausführungsform wird der Zahnriemen durch einen Riemenspanner lastabhängig unter Spannung gesetzt. Im Normalbetrieb ist die Riemenspannung gering, so daß der Antrieb extrem geräuscharm und verschleißarm arbeitet. Bei der Gurtbandstraffung wird die Riemenspannung erhöht, um eine Kraftübertragung ohne Überspringen der Zähne zu gewährleisten. Zugleich wird ein optimaler Spiel- und Toleranzausgleich erzielt.

Der verwendete Elektromotor ist vorzugsweise ein verschleißarmer bürstenloser Vier-Phasen-Motor. Durch eine bifilare Statorwicklung werden niedrige Kommutierverluste erzielt. Durch die Verwendung eines Motors mit Außenläufer ergibt sich eine kompakte Bauform. Der Außenläufer trägt vorzugsweise einen 14-poligen Neodym-Magnetring, wodurch bei kompakter Bauform ein hohes Antriebsmoment erreicht werden kann, insbesondere im kurzzeitigen Überlastbetrieb. Zwei Hall-Sensoren liefern die Rotorlage, die Drehrichtung und daraus die Gurtbandauszugslänge.

Der Sperrmechanismus des Gurtaufrollers besteht aus einem Lochkranz am Gurtspulenflansch und einem am Rahmen des Aufrollers axial verschiebbar sowie federbelastet gelagerten Raststift, der selektiv in den Löchern des Lochkranzes der Gurtspule verrastet wird. Das Eingreifen des Raststiftes in den Löchern des Lochkranzes wird durch daran angrenzende Einlaufschrägen erleichtert. Der Raststift wird durch einen Elektromagnet in der inaktivierten Ruhestellung gehalten. Im stromlosen Zustand wird der Raststift durch die Federbelastung in die Sperrstellung bewegt.

Die Steuerelektronik des Gurtaufrollers erfüllt bei der bevorzugten Ausführungsform insbesondere folgende Aufgaben:
- Motorkommutierung;
- Drehmomentsteuerung;
- Überlastschutz;
- Ansteuerung der Gurtspulenentriegelung;
- Steuerung aller Komfort- und Sicherheitsfunktionen;
- kontinuierliche Berechnung der aktuellen Gurtauszugslänge über den absoluten Drehwinkel der Gurtspule;
- Eingangssignale der verschiedenen angeschlossenen Sensoren diskret und über ein angeschlossenes Bussystem (CAN);
- schneller 8 bit Controller mit Idle-Mode und integriertem EEPROM;
- Stator auf der Leiterplatte integriert.

Bei der bevorzugten Ausführungsform eines Insassen-Rückhaltesystems für Fahrzeuge haben alle Gurtaufroller denselben elektromechanischen Grundaufbau und unterscheiden sich nur in ihrer Funktionalität, die im wesentlichen durch die in der elektronischen Steuereinheit enthaltenen Programmdaten bestimmt wird. So ist beispielsweise die Funktionalität der vorderen Gurtaufroller verschieden von der der hinteren Gurtaufroller. Die elektronischen Steuereinheiten aller Gurtaufroller können an einem gemeinsamen Zentralsensor angeschlossen sein.

Weitere Merkmale und Vorteile der Erfindung ergeben sich aus der folgenden Beschreibung einer bevorzugten Ausführungsform und aus den beigefügten Zeichnungen, auf die Bezug genommen wird. In den Zeichnungen zeigen:
Figur 1 ein Blockschaltbild der Steuerelektronik des Gurtaufrollers;

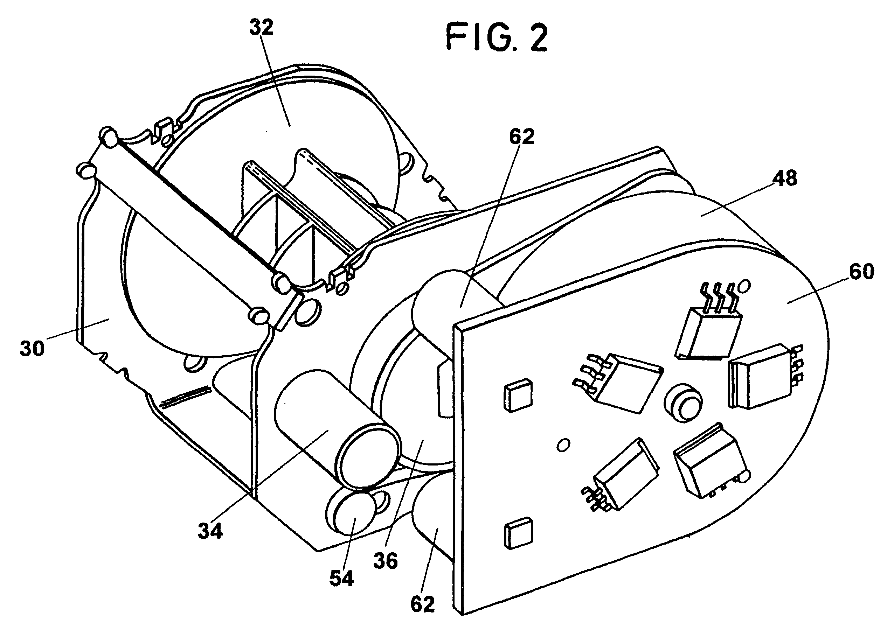

Figur 2 eine perspektivische Gesamtansicht des Gurtaufrollers mit Elektromotor-Antrieb;

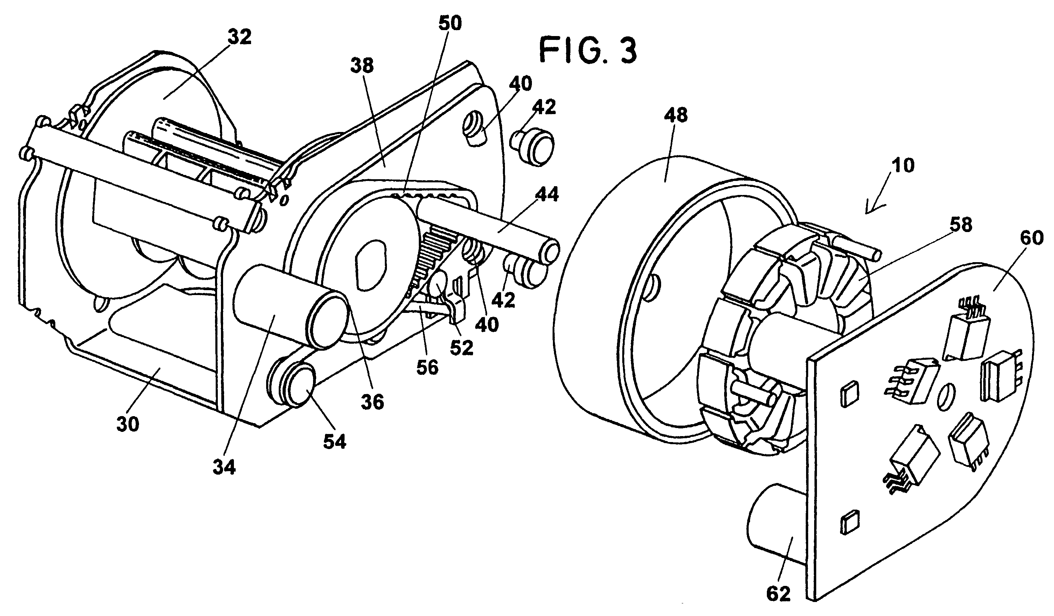

Figur 3 eine Explosionsansicht des Gurtaufrollers von Figur 2;
Figur 4 eine Seitenansicht des Gurtaufrollers bei abgenommenem Elektromotor-Antrieb; und
Figur 5 einen schematischen Axialschnitt des Elektromotors mit Antriebsritzel.

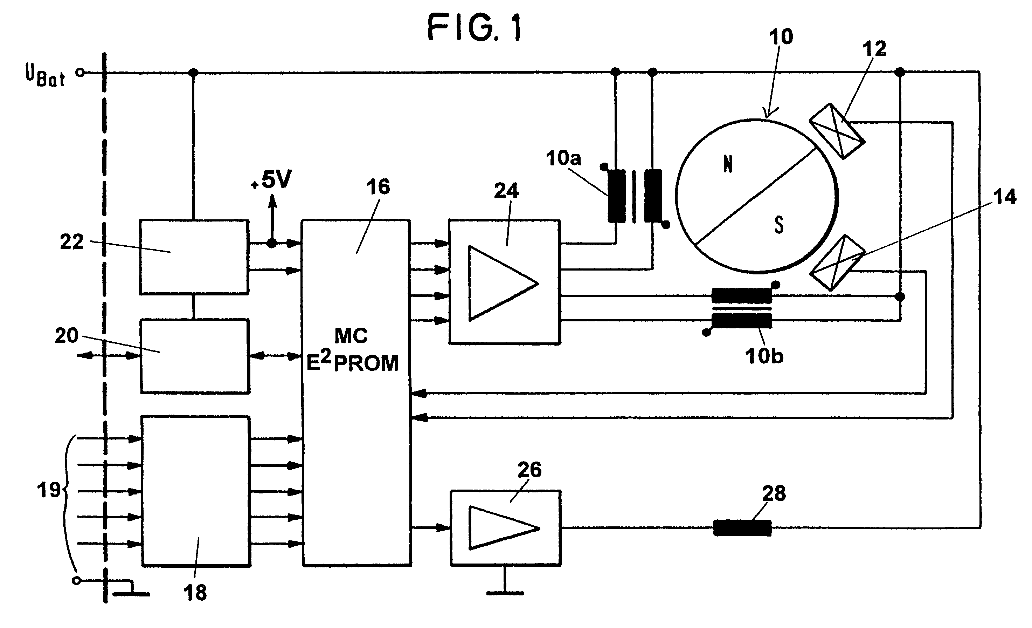

Das Blockschaltbild von Figur 1 zeigt zunächst einen Elektromotor 10, bei dem es sich um einen Außenläufer mit einem Neodym-Magnetring handelt. Der Außenläufer ist vorzugsweise 14-polig ausgebildet. Ferner handelt es sich bei dem Elektromotor 10 um einen bürstenlosen 4-Phasen-Gleichstrom-Motor, dessen Statorwicklung bifilar ausgeführt ist. Neben dem Außenläufer sind zwei Hall-Sensoren 12, 14 angeordnet. Mit diesen Hall-Sensoren 12, 14 wird die Drehung des Außenläufers inkremental erfaßt, wobei auch der Drehsinn detektiert wird, so daß ein absoluter Drehwinkel erfaßt werden kann. Ein Mikrocomputer 16 empfängt neben den Signalen von den Hall-Sensoren 12, 14 eine Reihe von Schaltsignalen über eine Schnittstelle 18 und ist überdies über einen Transceiver 20 mit einem CAN-Bus bidirektional gekoppelt. Die Stromversorgung bezieht der Mikrocomputer 16 über einen Spannungsregler 22 aus der Bordspannung U_{Bat}. Der Mikrocomputer 16 steuert über eine Treiberschaltung 24 die Statorwicklungen 10a und 10b des Elektromotors 10 an. Die Treiberschaltung 24 enthält hochbelastbare Halbleiter-Leistungsschalter vom Typ FET, die einen extrem geringen Durchgangswiderstand aufweisen und daher direkt auf einer Leiterplatte aufgebaut werden können. Über eine weitere Treiberschaltung 26 steuert der Mikrocomputer 16 die Magnetspule 28 eines Elektromagneten an, der einen Verriegelungsmechanismus an dem nachfolgend beschriebenen Gurtaufroller betätigt.

Der Gurtaufroller hat einen allgemein U-förmigen Rahmen 30, zwischen dessen parallelen Schenkeln eine Gurtspule 32 drehbar gelagert ist. Die Drehung der Gurtspule 32 im Rahmen 30 kann durch eine Sperrklinke oder einen Sperrstift oder mehrere dieser Elemente lasttragend blockiert werden. Sperrklinke oder Sperrstift werden durch einen Elektromagnet 34 betätigt. Dieser Elektromagnet 34 hat die in Figur 1 gezeigte Magnetspule 28.

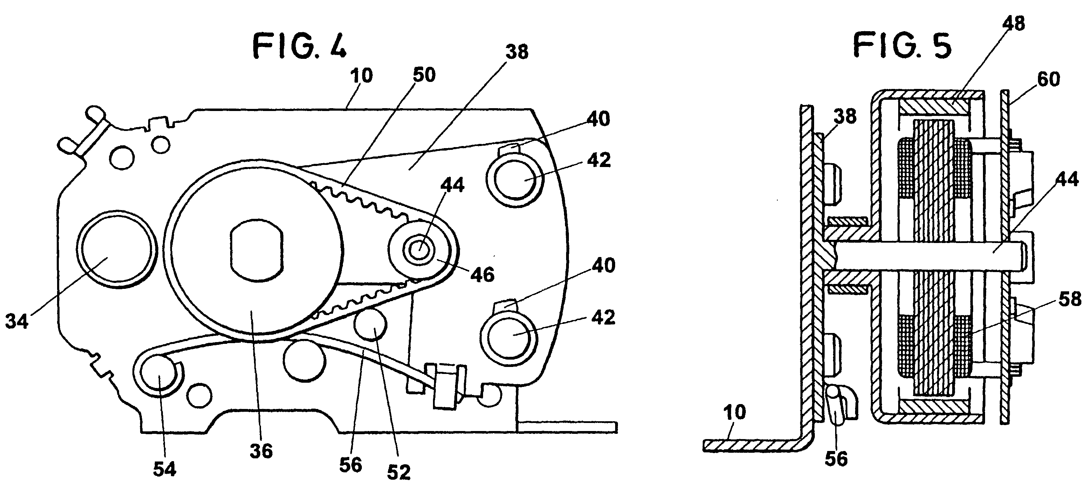

Eine Zahnriemenscheibe 36 ist drehfest mit der Gurtspule 32 gekoppelt. Eine Lagerplatte 38 ist um die Achse der Gurtspule 32 begrenzt verschwenkbar an der Außenseite eines Schenkels des Rahmens 30 angeordnet. Zur Begrenzung der Verschwenkung der Lagerplatte 38 ist diese mit zwei Langlöchern 40 versehen, in die zwei am Rahmen 30 verankerte Zapfen 42 eingreifen. Die Lagerplatte 38 trägt einen Lagerstift 44, auf dem der ein Antriebsritzel 46 aufweisende Außenläufer 48 des Elektromotors 10 gelagert ist. Ein Zahnriemen 50 ist auf die Zahnriemenscheibe 36 und das Antriebsritzel 46 aufgezogen. Am Außenumfang des Zahnriemens 50 zwischen Zahnriemenscheibe 36 und Antriebsritzel 46 befindet sich eine Spannrolle 52, die am Seitenschenkel des Rahmens 30 drehbar gelagert ist. Ein auf einem Zapfen am Seitenschenkel des Rahmens festgelegter Federdraht 56 drückt gegen die Lagerplatte 38 und beaufschlagt sie mit einem Drehmoment entgegen dem Uhrzeigersinn in Figur 4, wodurch die Lagerplatte 38 in die in Figur 4 gezeigte Schwenkstellung bewegt wird, bei welcher die Spannrolle 52 außer Eingriff mit dem Zahnriemen 50 ist. Diese Schwenkstellung nimmt die Lagerplatte 38 ein, wenn die von dem Zahnriemen 50 übertragene Last gering ist. Unter erhöhter Last wirkt auf die Lagerplatte 38 ein dem Federdraht 56 entgegengesetztes Drehmoment, das durch die Zugspannung im Zahnriemen 50 verursacht wird. Diese Zugspannung hat eine Komponente in Tangentialrichtung bezüglich der Schwenkachse der Lagerplatte 38. Diese Komponente ist um so größer, je höher die Zuglast ist. Bei Verschwenkung der Lagerplatte 38 entgegen der Wirkung des Federdrahtes 56 kommt der Zahnriemen 50 mit dem Umfang der Spannrolle 52 in Eingriff, so daß der Zahnriemen 50 in dem Maße gespannt wird, wie die übertragene Last zunimmt.

Der Stator 58 des Elektromotors 10 ist mit der gesamten Ansteuerelektronik auf einer Leiterplatte 60 aufgebaut. Die Leiterplatte 60 trägt auch die in Figur 1 gezeigten Hall-Sensoren 12, 14. Ferner trägt sie mindestens einen Kondensator 62 von hoher Kapazität, der als Energiereserve dient. Die Leiterplatte 60 ist beispielsweise durch Stehbolzen an einem Seitenschenkel des Rahmens 30 befestigt.

Die Funktionalität des beschriebenen Gurtaufrollers wird durch die vom Mikrocomputer 16 verarbeiteten Eingangssignale und die in seinem Programmspeicher bereitgehaltenen Programmroutinen bestimmt. Mit identischem elektromechanischen Grundaufbau können Gurtaufroller von sehr unterschiedlicher Funktionalität verwirklicht werden.

## Patentansprüche

1. Gurtaufroller für ein Insassen-Rückhaltesystem, mit:
- einem Rahmen (30);
- einer in dem Rahmen (30) drehbar gelagerten Gurtspule (32);
- einem Sperrmechanismus zur selektiven Blockierung der Gurtspule (32);
- einem fahrzeugsensitiven Sensor;
- einem Aktor zur Betätigung des Sperrmechanismus;
- einem Elektromotor (10), durch den die Gurtspule (32) antreibbar ist;
- einer elektronischen Steuereinheit, die eine Eingangsschnittstelle
und eine Ausgangsschnittstelle aufweist;
wobei der fahrzeugsensitive Sensor an die Eingangsschnittstelle und der Aktor sowie der Elektromotor an die Ausgangsschnittstelle angeschlossen sind,
**dadurch gekennzeichnet, daß**
- der Aktor durch einen Elektromagnet (34) gebildet ist, der eine Sperrklinke des Sperrmechanismus ansteuert;
- der Elektromotor (10) durch einen Zahnriemen (50) mit der Gurtspule (32) gekoppelt ist, wobei der Zahnriemen ein Antriebsritzel (46) des Elektromotors (10) mit einer seitlich an der Gurtspule (32) angeschlossenen Zahnriemenscheibe (36) größeren Durchmessers als das Antriebsritzel (46) koppelt;
- der Elektromotor (10) auf einer seitlich an einem Schenkel des Rahmens (30) begrenzt verschwenkbar angebrachten Lagerplatte (38) gelagert ist und der Zahnriemen (50) an einem Abschnitt zwischen Zahnriemenscheibe (36) und Antriebsritzel (46) durch Verschwenken der Lagerplatte (38) gegen eine an dem Schenkel des Rahmens (30) gelagerte Spannrolle (52) andrückbar ist.

2. Gurtaufroller nach Anspruch 1, mit einem der Steuereinheit zugeordneten Speichermodul, in dem wenigstens ein Teil der die Funktionalität der Steuereinheit bestimmenden Programmdaten gespeichert ist.

3. Gurtaufroller nach Anspruch 1, bei dem die Steuereinheit den Elektromotor (10) bei einer auf einen bevorstehenden Fahrzeugaufprall hinweisenden Konstellation der Signale von mehreren an die Eingangsschnittstelle angeschlossenen Sensoren im Sinne einer Gurtbandstraffung ansteuert.

4. Gurtaufroller nach Anspruch 1 oder 3, bei dem der Elektromotor (10) ein bürstenloser Vier-Phasen-Gleichstrom-Motor ist.

5. Gurtaufroller nach einem der Ansprüche 1, 3 und 4, bei dem der Elektromotor (10) eine bifilare Statorwicklung aufweist.

6. Gurtaufroller nach einem der Ansprüche 1, 3, 4 und 5, bei dem der Elektromotor (10) einen Außenläufer (48) mit einem Neodym-Magnetring aufweist.

7. Gurtaufroller nach Anspruch 6, bei dem der Elektromotor (10) einen 14-poligen Außenläufer (48) aufweist.

8. Gurtaufroller nach Anspruch 1, bei dem die Lagerplatte (38) durch eine Feder in eine Schwenkstellung belastet ist, in der die Spannrolle (52) vom Zahnriemen (50) beabstandet ist, und die Lagerplatte (38) unter der Wirkung der bei Last im Zahnriemen (50) auftretenden Zugspannung selbsttätig und in einem von der Last abhängigen Maße in eine entgegengesetzte Schwenkstellung bewegt wird, bei der die Spannrolle (52) gegen den Zahnriemen (50) drückt.

9. Gurtaufroller nach Anspruch 1, bei dem der Elektromotor (10) mit einer Leiterplatte (60), auf der eine elektronische Ansteuerschaltung mit Leistungs-Halbleiterelementen aufgebaut ist, zu einer Baugruppe zusammengefaßt ist.

10. Gurtaufroller nach einem der Ansprüche 1 und 3 bis 9, mit dem Elektromotor (10) zugeordneten Sensoren, aus deren Signalen ein der abgezogenen Gurtbandlänge entsprechender absoluter Drehwinkel der Gurtspule (32) durch die Steuereinheit bestimmbar ist.

11. Gurtaufroller nach einem der Ansprüche 1 und 3 bis 10, bei dem die Steuereinheit zur Ansteuerung des Elektromotors (10) wenigstens eines, und vorzugsweise mehrere, der folgenden Sensor-Signale berücksichtigt:
- ABS-Signal,
- Bremsdruck-Signal,
- Beschleunigungs-Signal,
- Fahrzeug-Geschwindigkeits-Signal,
- Motordrehzahl-Signal,
- Gurtkraft-Signal.
- Absoluter Gurtspulen-Drehwinkel.

12. Gurtaufroller nach Anspruch 10 oder 11, bei dem die Steuereinheit die Gurtspule (32) über den Elektromotor (10) mit einem permanenten Aufrollmoment beaufschlagt, dessen Wert über den absoluten Drehwinkel der Gurtspule (32) variabel ist.

13. Insassen-Rückhaltesystem für Fahrzeuge, mit mehreren Gurtaufrollern nach einem der vorstehenden Ansprüche, worin die Funktionalität eines jeden Gurtaufrollers durch die in dem Programmspeicher der jeweiligen Steuereinheit eingespeicherten Programmdaten bestimmt ist.

## Claims

1. A belt retractor for an occupant restraint system, comprising:
- a frame (30);
- a belt reel (32) rotatably mounted in the frame (30);
- a locking mechanism for selectively blocking the belt reel (32);
- a vehicle-sensitive sensor;
- an actuator for actuating the locking mechanism;
- an electric motor (10) by which the belt reel (32) is drivable;
- an electronic control unit including an input interface and an output interface;
the vehicle-sensitive sensor being connected to the input interface, and the actuator and the electric motor being connected to the output interface,
**characterized in that**
- the actuator is formed by an electromagnet (34) driving a locking pawl of the locking mechanism;
- the electric motor (10) is coupled to the belt reel (32) by a toothed belt (50), the toothed belt coupling a drive pinion (46) of the electric motor (10) to a toothed belt pulley (36) side-mounted on the belt reel (32), the toothed belt pulley (36) having a diameter larger than that of the drive pinion (46);
- the electric motor (10) is mounted on a support plate (38) that is mounted to the side of a leg of the frame (30) for limited pivoting movement, and, by pivoting of the support plate (38), the toothed belt (50), at a section between the toothed belt pulley (36) and the drive pinion (46), can be pressed against a tensioning pulley (52) mounted on the leg of the frame (30).

2. The belt retractor as set forth in claim 1, comprising a storage module assigned to the control unit and in which at least part of the program data determining the functionality of the control unit is stored.

3. The belt retractor as set forth in claim 1, in which the control unit signals the electric motor (10) so as to provide a belt tensioning when the constellation of signals from a plurality of sensors connected to the input interface indicates an imminent vehicle impact.

4. The belt retractor as set forth in claim 1 or 3, in which the electric motor (10) is a brushless four-phase DC motor.

5. The belt retractor as set forth in any of claims 1, 3 and 4, in which the electric motor (10) includes a bifilar stator winding.

6. The belt retractor as set forth in any of claims 1, 3, 4 and 5, in which the electric motor (10) includes an outside rotor (48) having a neodymium magnetic ring.

7. The belt retractor as set forth in claim 6, in which the electric motor (10) includes a 14-pole outside rotor (48).

8. The belt retractor as set forth in claim 1, in which the support plate (38) is biased by a spring into a pivoted position in which the tensioning pulley (52) is spaced away from the toothed belt (50) and, with the action of the tensile stress occurring in the toothed belt (50) when loaded, the support plate (38) is moved automatically and to an extent which depends on the load into an opposed pivoted position in which the tensioning pulley (52) presses against the toothed belt (50).

9. The belt retractor as set forth in claim 1, in which the electric motor (10) is grouped into an assembly unit together with a printed circuit board (60) which mounts an electronic signaling circuit comprising power semiconductor components.

10. The belt retractor as set forth in any of claims 1 and 3 to 9, comprising sensors assigned to the electric motor (10), the sensors providing signals from which an absolute angle of rotation of the belt reel (32) corresponding to the belt webbing length withdrawn can be determined by the control unit.

11. The belt retractor as set forth in any of claims 1 and 3 to 10, in which the control unit for signaling the electric motor (10) takes into account at least one, and preferably several, of the following sensor signals:
- ABS signal,
- braking pressure signal,
- acceleration signal,
- vehicle speed signal,
- engine speed signal,
- belt force signal,
- absolute angle of rotation of the belt reel.

12. The belt retractor as set forth in claim 10 or 11, in which the control unit loads the belt reel (32) via the electric motor (10) with a permanent retraction moment the value of which can be varied across the absolute angle of rotation of the belt reel (32).

13. An occupant restraint system for vehicles, comprising a plurality of belt retractors as set forth in any of the preceding claims, wherein the functionality of each belt retractor is dictated by the program data stored in the program memory of the respective control unit.

## Revendications

1. Enrouleur de sangle pour un système de retenue de passager, comportant. :
- un cadre (30) ;
- une bobine de sangle (32) logée rotative dans le cadre (30) ;
- un mécanisme de blocage pour le blocage sélectif de la bobine de sangle (32) ;
- un capteur sensible aux mouvements du véhicule ;
- un actionneur pour l'actionnement du mécanisme de blocage ;
- un moteur électrique (10) par lequel la bobine de sangle (32) peut être entraînée ;
- une unité de commande électronique qui comporte une interface d'entrée et une interface de sortie ;
le capteur sensible aux mouvements du véhicule étant raccordé à l'interface d'entrée, et l'actionneur ainsi que le moteur électrique (10) étant raccordés à l'interface de sortie,
**caractérisé en ce que**
- l'actionneur est formé par un électroaimant (34) qui commande un cliquet d'arrêt du mécanisme de blocage.
- le moteur électrique (10) est couplé à la bobine de sangle (32) par une courroie dentée (50), la courroie dentée accouplant un pignon d'entraînement (46) du moteur électrique (10) avec une roue dentée (36) qui est raccordée latéralement à la bobine de sangle (32) et qui a un plus grand diamètre que le pignon d'entraînement (46) ;
le moteur électrique (10) est logé sur une plaque de support (38) montée pivotante de façon limitée latéralement sur un côté du cadre (30) et dans lequel la courroie dentée (50) peut être poussée, au niveau d'un tronçon situé entre la roue dentée (36) et le pignon d'entraînement (46), par un pivotement de la plaque de support (38), contre un galet tendeur (52) logé sur un côté du cadre (30).

2. Enrouleur de sangle selon la revendication 1, comportant un module de mémoire qui est associé à l'unité de commande et dans lequel au moins une partie des données de programme déterminant la fonctionnalité de l'unité de commande est mémorisée.

3. Enrouleur de sangle selon la revendication 1, dans lequel l'unité de commande, dans le cas d'une certaine configuration, indiquant un choc imminent du véhicule, des signaux de plusieurs capteurs raccordés à l'interface d'entrée, commande le moteur électrique (10) en vue d'un serrage de la sangle.

4. Enrouleur de sangle selon la revendication 1 ou 3, dans lequel le moteur électrique (10) est un moteur à courant continu tétraphasé sans balai.

5. Enrouleur de sangle selon l'une quelconque des revendications 1, 3 et 4, dans lequel le moteur électrique (10) comporte un enroulement de stator bifilaire.

6. Enrouleur de sangle selon l'une quelconque des revendications 1, 3, 4 et 5, dans lequel le moteur électrique (10) comporte un induit extérieur (48) avec un anneau magnétique au néodyme.

7. Enrouleur de sangle selon la revendication 6, dans lequel le moteur électrique (10) comporte un rotor extérieur (48) à 14 pôles.

8. Enrouleur de sangle selon la revendication 1, dans lequel la plaque de support (38) est soumise à la contrainte d'un ressort dans une position de pivotement dans laquelle le galet tendeur (52) est à une certaine distance de la courroie dentée (50) et dans lequel la plaque de support (38) est déplacée, sous l'action d'un effort de traction apparaissant lors d'une charge dans la courroie dentée (50), automatiquement et dans une mesure dépendante de la charge, vers une position de pivotement opposée dans laquelle le galet tendeur (52) appuie sur la courroie dentée (50).

9. Enrouleur de sangle selon la revendication 1, dans lequel le moteur électrique (10) est réuni en un bloc avec une carte de circuits imprimés (60) sur laquelle se trouve un circuit de commande électronique avec des éléments semiconducteurs de puissance.

10. Enrouleur de sangle selon l'une quelconque des revendications 1 et 3 à 9, comportant des capteurs qui sont associés au moteur électrique (10) et à partir des signaux desquels un angle de rotation absolu de la bobine de sangle (32), correspondant à la longueur de sangle tirée, peut être déterminé par l'unité de commande.

11. Enrouleur de sangle selon l'une quelconque des revendications 1 et 3 à 10, dans lequel l'unité de commande prend en compte, pour le pilotage du moteur électrique (10), au moins l'un, et de préférence plusieurs, des signaux de capteurs suivants :
- signal ABS,
- signal de pression de freinage,
- signal d'accélération,
- signal de vitesse du véhicule,
- signal de vitesse de rotation du moteur,
- signal de force de sangle,
- angle de rotation absolu de la bobine de sangle.

12. Enrouleur de sangle selon la revendication 10 ou 11, dans lequel l'unité de commande soumet la bobine de sangle (32), par l'intermédiaire du moteur électrique (10), à un moment d'enroulement permanent dont la valeur est variable en fonction de l'angle de rotation absolu de la bobine de sangle (32).

13. Système de retenue de passager pour véhicules, comportant plusieurs enrouleurs de sangles selon l'une quelconque des revendications précédentes, dans lequel la fonctionnalité de chaque enrouleur de sangle est déterminée par les données de programme mémorisées dans la mémoire de programme de l'unité de commande respective.
